# EUROPEAN PATENT SPECIFICATION

(11) **EP 2 246 304 B1**
(45) Date of publication and mention of the grant of the patent: **30.11.2016**
(21) Application number: 08869929.3
(22) Date of filing: 26.12.2008
(51) Int. Cl.: C01G 23/047, B01J 35/02, C23C 26/00, C25D 11/26, B01J 21/06, B01J 35/00, B01J 37/34, B82Y 30/00, C01G 23/08, C23C 30/00, C23C 8/10, C23C 8/36, C25D 11/02

(54) **TITANIUM OXIDE AND METHOD OF PRODUCING THE SAME**
TITANDIOXID UND DIE HERSTELLUNGSMETHODE DESGLEICHEN
OXYDE DE TITANE ET PROCÉDÉ DE FABRICATION LEDIT

(30) Priority: 04.01.2008 JP 2008000204
(43) Date of publication of application: 03.11.2010
(73) Proprietor: National University Corporation Kumamoto University, Kumamoto-shi Kumamoto 860-8555 (JP); Kuraray Co., Ltd., Okayama 710-0801 (JP)
(72) Inventor: MASHIMO, Tsutomu, Kumamoto-shi Kumamoto 860-8555 (JP); EMIL, Uulu Omurzak, Kumamoto-Shi Kumamoto 860-8555 (JP); SAADAT, Sulaimankulova, Bishkek 720071 (KG); OKAMOTO, Makoto, Kurashiki-shi Okayama 710-0801 (JP); IWASAKI, Hideharu, Kurashiki-shi Okayama 710-0801 (JP)
(74) Representative: Hart-Davis, Jason
(86) International application number: PCT/JP2008/073957
(87) International publication number: WO 2009/087951

(56) References cited:
- WO-A1-2006/135104
- JP-A- 7 171 408
- JP-A- 63 089 405
- JP-A- 2005 298 316
- JP-A- 2005 298 317
- JP-A- 2006 076 798
- OMURZAK E ET AL: "Synthesis Method for Nanomaterials by Pulsed Plasma in Liquid", JOURNAL OF NANOSCIENCE AND NANOTECHNOLOGY, AMERICAN SCIENLIFLC PUBLISHERS, US, vol. 7, no. 9, 1 September 2007 (2007-09-01), pages 3157-3159, XP008139461, ISSN: 1533-4880, DOI: 10.1166/JNN.2007.804
- 'Proceeding of the Symposium on Shock Wave', vol. 2006, 15 March 2007 article EMIL OMURZAK UULU ET AL.: 'Synthesis method for nanomaterials by pulsed plasma in liquid', pages 265 - 266
- EMIL OMURZAK ET AL.: 'Synthesis Method for Nanomaterials by Pulsed Plasma in Liquid' J. NANOSCIENCE NANOTECHNOLOGY vol. 7, no. 9, September 2007, pages 3157 - 3159, XP008139461

## Description

### TECHNICAL FIELD

The present invention is related to a method of producing anatase titanium oxide having especially high photocatalytic activity as a photocatalyst useful as a material for environmental clean-up, such as removal of toxic substances, deodorization and decomposition of malodorous substances, sterilization and prevention of fouling.

### BACKGROUND ART

A photocatalyst is a substance that produces radicals (hydroxy radicals, super oxide anions) in response to application of light onto its surface to have functions to adsorb, oxidize and decompose toxic substances (e.g., aldehydes), deodorize and decompose malodorous substances (substances that are regulated by the Malodor Prevention Law), prevention of fouling, sterilization and the like. In recent years, attempts have been made to utilize these functions by application of a photocatalyst coating. There are many metal oxides that can be used as a photocatalyst. Among the metal oxides, titanium oxide, which in general has high activity, is popularly used as a photocatalyst. Titanium oxide exists as three types of crystals, i.e., anatase, rutile and brookite, and as amorphous matter. Among the titanium oxides, anatase titanium oxide is excellent in both functionality and safety.

Common processes of obtaining an anatase titanium oxide powder are a vapor phase process and a liquid phase process. A typical anatase titanium oxide produced by the vapor phase process is Degussa P-25 (manufactured by Nippon Aerosil Co., Ltd.). In the vapor phase process, titanium chloride is hydrolyzed in an oxygen atmosphere at a high temperature of about 1000°C, and the resulting hydrolysis product is condensed to produce a titanium oxide powder having a specific surface area of 40 m²/g (BET method). There is a disclosure of a process of preparing titanium oxide by CVD (chemical vapor deposition) in a furnace at a temperature of 600 to 800°C (please refer to Non-patent Document 1).

Sol-gel processes, HyCOM (Hydrothermal Crystallization in Organic Media) and sulfuric acid processes are disclosed in related technical references as processes of obtaining anatase titanium oxide by a liquid phase process.

Production of titanium oxide by a sol-gel process requires two steps: a step of obtaining titanium hydroxide from titanium alkoxide by hydrolysis at a normal pressure; and a step of sintering in which titanium hydroxide is polycondensed by heating to convert it into titanium oxide (please refer to Non-patent Document 2).

HyCOM is known as a process of obtaining titanium oxide in which moisture or water vapor in gas of a pressure (10 kg/cm²G or greater) is fed as moisture required for the hydrolysis of alkoxide to a solvent in which titanium alkoxide is dissolved (please refer to Non-patent Document 3).

There is also a disclosure of a sulfuric acid process in which titanium sulfate is heated, hydrolyzed and fired to obtain titanium oxide (please refer to Patent Document 1).

There is also a disclosure of a process in which a titania sol, titania gel or titania sol-gel mixture is subjected to heating treatment in a sealed vessel (please refer to Patent Document 2)

There is also a disclosure of use of a pulse plasma process to produce titanium monoxide (please refer to Non-patent Document 4).
Non-patent Document 1: Kagakukogakuronbunshu (collection of papers of chemical engineering), Vol. 16, No. 3, pp. 584-587, issued in May 1990
Non-patent Document 2: Zorugeruho no kagaku (science of sol-gel process), pp. 8-15, issued in July 1988, Agne-shofusha
Non-patent Document 3: J. Mater. Sci. Lett., 15, 197 (1996)
Non-patent Document 4: J. of Nanoscience and Nanotechnology, Vol. 7, pp. 3157-3159,2007
Patent Document 1: JP 07-171408 A
Patent Document 2: JP 11-335121 A

The patent application WO 2006/135104 discloses a method for producing a titanium dioxide particle doped with a rare earth element comprising a step for preparing a liquid precursor containing a titanium source and a rare earth metal source wherein the amount of rare earth element in the rare earth metal source is more than 0 at% and not more than 5.0 at%, a step for generating a thermal plasma, and a step for introducing the liquid precursor into the thermal plasma.

The patent application JP 2006 076798 discloses a method of preparing a titanium oxide particle, wherein hydrolysate of titanium alkoxide or a hydrolysate of a titanium metal salt is mixed with organic alkalis in a prescribed solvent to prepare a reaction solution, and the reaction solution is subsequently heated in a sealed vessel to produce the titanium oxide particle which has radially extended parts, each having a ridge in almost the middle of its length, and forms a star shape as a whole.

The patent application JP 7 171408 discloses a photocatalytic body, obtained by stacking photocatalyst granules on a substrate with a hardly decomposable binder, and used for decomposition, purification and sterilization of harmful substances, malodorous substances, etc., generated in an ordinary living environment.

Emil Omurzak Uulu et al. discloses in "Synthesis method for nanomaterials by pulsed plasma in liquid' (Journal of Nanoscience and Nanotechnology, American Scientific Publishers, US, vol.7, no.9, 1 September 2007 (2007-09-01), pages 3157-3159), a synthesis method of nanomaterials using pulsed plasma in liquid by the low voltage spark discharge.

### PROBLEM TO BE SOLVED BY THE INVENTION

Production of anatase titanium oxide powder by the above-mentioned vapor phase processes has the following disadvantages: a high heat source apparatus is required because the preparation of anatase titanium oxide requires a reaction atmosphere of high temperature (in the vapor phase process, the temperature is normally 800°C or higher); there are some difficulties in implementing the vapor phase processes in a view of operability and safety; and a special apparatus is required because titanium chloride having high reactivity is used as a raw material. The CVD process has a similar problem as described above with regard to raw materials. The CVD process has another problem that a product obtained by the CVD process includes an impurity such as a halogen.

Production of anatase titanium oxide by a sol-gel process involves sintering as an essential step, and a heating temperature for sintering is required to be in the range of 300 to 700°C. When the heating treatment is carried out at a temperature that is lower than 300°C, the resulting titanium oxide remains amorphous. On the other hand, when the heating treatment is carried out at a temperature that is greater than 700°C, crystal transformation of anatase titanium oxide to rutile titanium oxide, which has low photocatalytic activity, occurs. Even when the heating treatment is carried out at 300°C or higher, a mixture of anatase and rutile titanium oxides may be produced, depending on a size of particles baked, a structure of a heating apparatus used and a heating technique.

A titanium oxide obtained by HyCOM has characteristics that it has high heat-resistance and retains the anatase structure even after being baked at a temperature greater than 900°C. However, such a titanium oxide has disadvantages that careful attention is required in the control of moisture in raw materials, and that a special reaction apparatus is required to produce high-pressure steam.

Production of a titanium oxide by a sulfuric acid process has problems that it consists of many steps and extremely intrusive work. Specifically, the production involves heating and hydrolyzing titanium sulfate to obtain an acidic titanium sol and adding sodium hydroxide to the acidic titanium sol to adjust the pH to 7, followed by filtration, washing and crystallization. Thereafter, water is added to the resulting titanium oxide wet cake to prepare a titanium oxide slurry, and then sodium hydroxide is added to adjust the pH to 7, followed by hydrothermal treatment in an autoclave at 150°C for 3 hours. Then, nitric acid is added to the slurry after the hydrothermal treatment to adjust the pH to 7, followed by filtration, washing with water and drying (110°C, 3 hours). The production has another problem that a large amount of wastes, including a waste water, are generated, since it is necessary to enhance a washing step during the production process to obtain pure anatase titanium oxide, considering that contamination of the anatase titanium oxide with the metal used for neutralization, e.g., sodium etc., may readily occur.

A method using a titania sol or gel or sol-gel mixture also has a problem that it requires a step of preparing a sol or gel in the presence of an organic matter such as alcohol, and a special apparatus in which a reaction is allowed to take place under pressure at a high temperature of at least 200°C. The method has another problem that it requires a step of removing organic matters and produces a large amount of wastes such as waste water.

Non-patent Document 4 describes neither a titanium oxide nor a method of producing a titanium oxide, though it describes a method for the production of a titanium monoxide by a pulse plasma process at a high electric current.

### MEANS FOR SOLVING THE PROBLEM

The present inventors conducted intensive and extensive studies to address the above-described problems, and consequently found that titanium oxide, which is a metal oxide, could be obtained by situating titanium metal electrodes in water at a low electric current to create pulse plasma between the metal electrodes. Based on this finding, the present invention was completed.

The present invention provides:
[1] a method of producing an anatase titanium oxide, comprising creating pulse plasma by an electric current of lower than 5 amperes between titanium electrodes in water to oxidize titanium;
[2] a method of producing a composite titanium oxide having the anatase structure and the rutile structure, comprising heating an anatase titanium oxide obtained by the method of [1]; and

### ADVANTAGES OF THE INVENTION

The method of the present invention can provide a titanium oxide having high light absorbance, with a reflectance of 80% or lower with respect to light having a wavelength of 400 to 700 nm. Such a titanium oxide is useful as a pigment and a photocatalyst, because it absorbs not only ultraviolet light but also visible light.

### BRIEF DESCRIPTION OF THE DRAWINGS

Figure 1 shows an X-ray diffraction pattern of a titanium oxide obtained in Example 1.
Figure 2 shows transmission electron microscopy images of the titanium oxide obtained in Example 1; a) is a low-resolution image, and b) is a high-resolution image.
Figure 3 is a graph showing the results of thermogravimetric analysis of the titanium oxide obtained in Example 1.

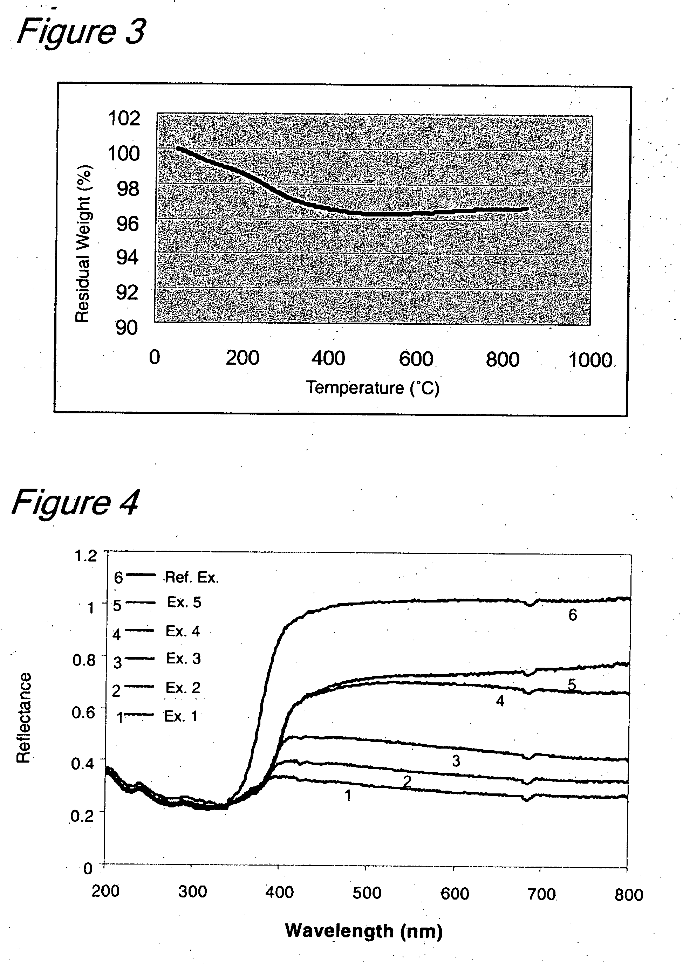

Figure 4 shows ultraviolet-visible reflection spectra of titanium oxides obtained in Examples 1 to 5 and Reference Example. In Figure 4, "1" is an ultraviolet-visible reflection spectrum of the titanium oxide obtained in Example 1; "2" is an ultraviolet-visible reflection spectrum of a titanium oxide obtained in Example 2; "3" is an ultraviolet-visible reflection spectrum of a titanium oxide obtained in Example 3; "4" is an ultraviolet-visible reflection spectrum of a titanium oxide obtained in Example 4; "5" is an ultraviolet-visible reflection spectrum of a titanium oxide obtained in Example 5; and "6" is an ultraviolet-visible reflection spectrum of a titanium oxide obtained in Reference Example.
Figure 5 is a graph showing the results of thermogravimetric analysis of the titanium oxide obtained in Reference Example.
Figure 6 shows X-ray diffraction patterns of the titanium oxides obtained in Examples 1 to 5 and Reference Example.
Figure 7 shows Raman spectra of the titanium oxides obtained in Examples 1 to 5 and Reference Example.

### BEST MODE FOR CARRYING OUT THE INVENTION

In the method of the present invention, a titanium oxide is obtained by pulse plasma created using titanium electrodes in water. The present method selectively produces an anatase titanium oxide. The resulting titanium oxide is blue. Primary particles have a particle size of several to several tens of nanometers, and the titanium oxide can be obtained as an aggregate. It is unknown why the titanium oxide is blue, but the color is probably due to the fact that unlike an ordinary anatase titanium oxide, the anatase titanium oxide of the present invention absorbs ultraviolet light, visible light and infrared light. Since the titanium oxide obtained by the method of the present invention absorbs not only ultraviolet light but also visible light, the titanium oxide is expected to provide a new pigment as well as to produce a new photocatalytic effect.

Being capable of absorbing only light of the ultraviolet range, an ordinary anatase titanium oxide produces only a small effect when it is used in a place or applications in which effective use of ultraviolet rays is not possible. On the other hand, the titanium oxide obtained by the method of the present invention can be used as a photocatalyst under visible light, increasing the efficacy of the titanium oxide and making it possible to use the titanium oxide not only in the air but also in water and the like. Thus, use of the titanium oxide obtained by the method of the present invention as a photocatalyst for deodorization, sterilization, photoelectric conversion and the like can be expected.

Titanium that is used as electrodes in the present invention is not particularly limited, and any commonly available metallic titanium can be used. Considering structural distortion and effects of impurities on light absorbence, titanium with a purity of at least 99%, more preferably at least 99.5%, is commonly used. Titanium may be used in any shape, including a stick, wire and plate. With regard to sizes of the electrodes, the electrodes may have different sizes.

In the present invention, water is used as an oxidizing agent. Water to be used is not particularly limited. Examples of water that can be used include distilled water and purified water. Considering that a different type of metal may be included in the resulting titanium oxide, use of ion-exchanged water is preferred.

A temperature at which the present invention is carried out is not particularly limited. Normally, the present invention is carried out at a temperature in the range of a room temperature to 300°C. An excessively high temperature is not preferred, because it requires a special reaction vessel. An excessively low temperature is also not preferred, because it leads to a decrease in efficiency of titanium oxide production during plasma creation. Thus, the present invention is preferably carried out at a temperature in the range of 60 to 200°C, more preferably 80 to 120°C.

In the present invention, plasma is created to produce titanium oxide. A voltage for creating plasma is not particularly limited. Normally, the voltage is set as 50 to 500 V, preferably in view of safety and necessity of a special apparatus, 60 to 400 V, more preferably 80 to 300 V. It should be noted that an excessively low voltage may result in insufficient development of titanium oxidation to produce a composite oxide.

In the present invention, an electric current for creating plasma is lower than 5 A between titanium electrodes in water to oxidize titanium and preferably the electric current is set as 0.1 to lower than 5 A, especially 0.2 A to lower than 5 A. In view of energy efficiency, the electric current is set as 0.2 to 4 A, more preferably 0.5 to 3.5 A. It should be noted that an excessively high electric current may cause decomposition during the reaction to produce an oxide such as titanium monoxide.

A pulse interval used to generate pulsed plasma is not particularly limited. A period of one pulse cycle is not particularly limited, and the period of one pulse cycle is set as 5 to 100 milliseconds, preferably, for improvement in efficiency per unit time, 3 to 80 milliseconds, more preferably 1 to 50 milliseconds.

It is obvious that a pulse duration for one pulse cycle varies according to a voltage and a current to be applied. Normally, the present invention is carried out with a pulse duration of 1 to 1000 microseconds; in view of discharge efficiency, the duration is preferably set as 2 to 500 microseconds, more preferably 5 to 100 microseconds, especially 1 to 50 microseconds, most preferably 2 to 30 microseconds.

In the present invention, the electrodes may be vibrated. Application of vibration is preferred, because it prevents accumulation of titanium oxide deposited between the electrodes, enabling efficient discharge. Any method for the application of vibration may be used. For example, vibrations may be applied periodically or intermittently by means of an apparatus such as a vibrator and an actuator.

The present invention may be carried out under any atmospheric condition, for example, under reduced pressure, increased pressure, or normal pressure. Normally, the present invention is carried out under a stream of inert gas such as nitrogen and argon in view of safety and operability, in the presence of oxygen and hydrogen generated due to electrolysis of water.

Titanium oxide obtained by the present invention is accumulated in water. Since the titanium oxide is highly hydrophilic, there are many particles floating in water. Such floating particles may be forcibly settled using a centrifuge or the like. The water is removed by decantation or the like to obtain the sediment, whereby titanium oxide is obtained.

Titanium oxide obtained by the method of the present invention is thermally stable. Thus, the titanium oxide can be subjected to heating treatment at a temperature of up to 800°C, depending on a required degree of dryness and visible light reflectance. Even when the titanium oxide is heated, a light reflectance of the titanium oxide does not exceed 80%, and the titanium oxide is still capable of absorbing visible light; the titanium oxide is thermally stable.

The heating treatment may be carried out by using either of a batch process and a continuous process under air or inert gas. A heating rate is not particularly limited, but normally the heating rate is set as 0.1 to 100°C per minute, preferably 1 to 50°C per minute.

The following non-limiting examples describe the present invention in detail.

### Example 1

In a 300-ml beaker, 200 g of ion exchanged water was charged and heated to 90°C. Metallic titanium electrodes (purity: 99% or greater) having a diameter of 5 mm and a length of 100 mm were submerged into the water, and a distance between the electrodes was fixed at 1 mm. To prevent accumulation of a reaction product on a surface of the electrodes and to thereby increase reaction efficiency, a vibration of 200 Hz was applied. The electrodes were connected to an alternating-current power supply, and pulse discharge was carried out at 200 V and 3A. The discharge interval was set as 20 milliseconds. The discharge time was set as 20 microseconds. When the discharge was started, precipitation of titanium oxide was observed between the electrodes. The discharge was continued for 5 hours. Then, large sediment particles (TiO particles) were removed by decantation, and the resulting suspension was subjected to centrifugation at 4000 rpm for 30 minutes to settle an intended product (TiO₂ particles). The titanium oxide settled by the centrifugal separation was recovered, washed with 200 ml of ion exchanged water and dried with hot air at 110°C for 3 hours to obtain 5 g of intended anatase titanium oxide.

The resulting titanium oxide was baked at 900°C. It was determined by X-ray structural analysis that the resulting substance was rutile titanium oxide. Consequently, it was confirmed that the substance was titanium oxide (TiO₂).

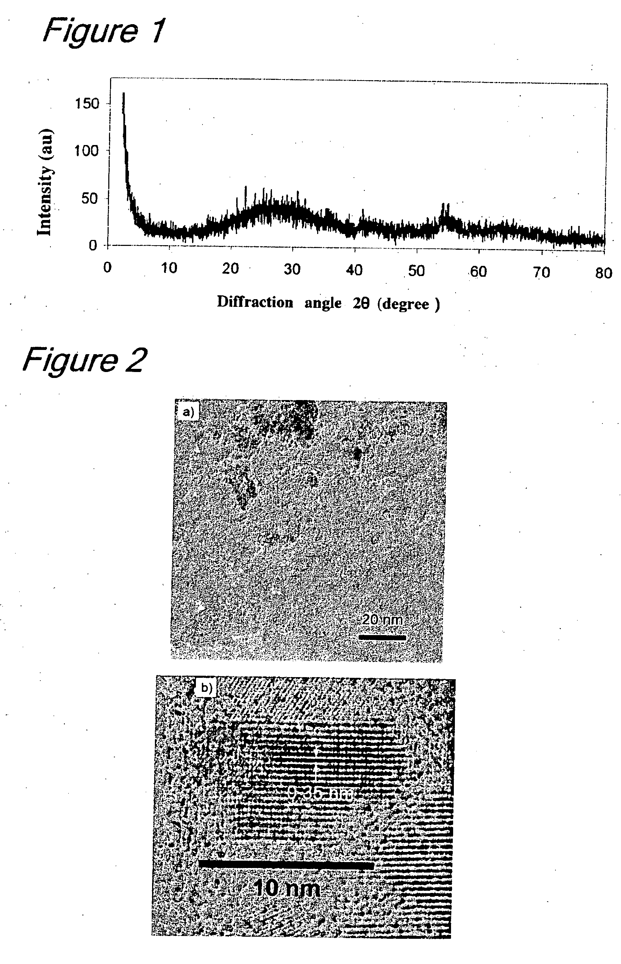

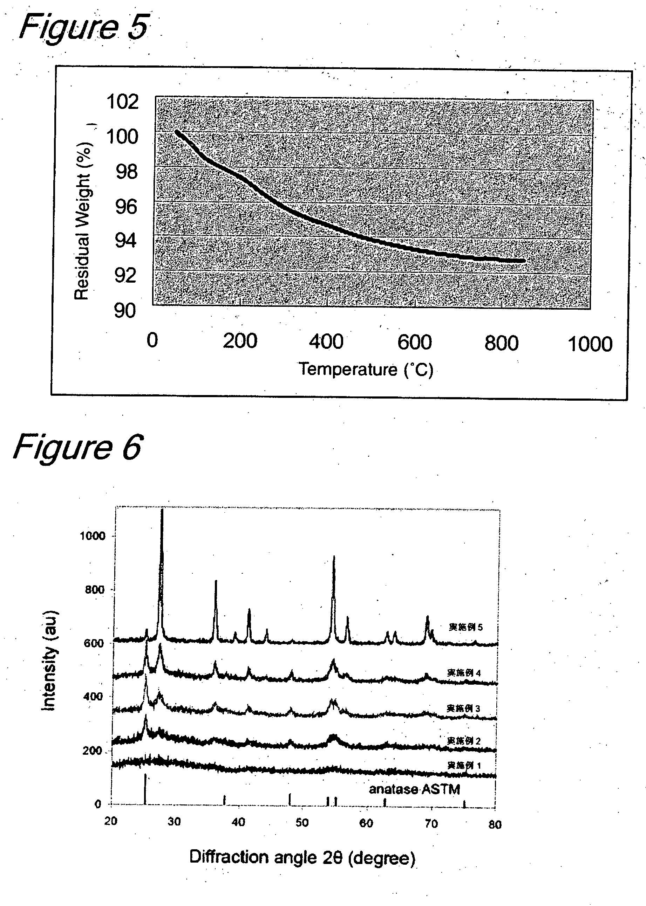

It was determined based on transmission electron microscopic lattice images of the titanium oxide after the drying with hot air at 110°C that the titanium oxide obtained after the drying with hot air was anatase titanium oxide. The results of X ray structural analysis of the titanium oxide (by using XRD Cu Kα radiation, Rigaku RINT-2500VHF manufactured by Rigaku Corporation) are shown in Figures 1 and 6.

Figure 2 shows the transmission electron microscopic images (TEM Philips Tecnai F20 S-Twin) of the titanium oxide obtained after the drying with hot air at 110°C. Figure 3 shows the results of thermogravimetric analysis (EXSTAR 6000 manufactured by Seiko Instruments Inc.) of the titanium oxide obtained after the drying with hot air at 110°C. Figure 4 shows an ultraviolet-visible reflection spectrum (V-550 UV/VIS spectrometer manufactured by JASCO International Co., Ltd.JASCO) of the titanium oxide obtained after the drying with hot air at 110°C. Table 1 shows a percentage of weight loss determined by thermogravimetric analysis and a reflectance determined based on the ultraviolet-visible reflection spectra.

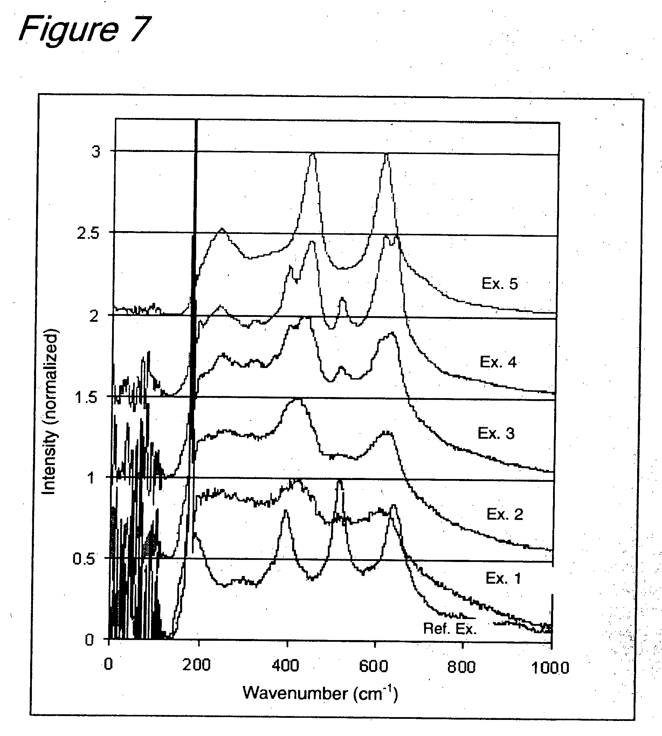

Figure 7 shows a Raman spectrum of the titanium oxide (measured by NRS-3100 manufactured by JASCO International Co., Ltd.).

In a 25-ml glass sample tube, 10 mg of the titanium oxide obtained in Example 1 was added to 20 ml of an aqueous solution containing 10 µmol/L methylene blue and dispersed by ultrasonication. A transmittance of the resulting solution with respect to light of 630 nm wavelength was measured, and a rate of change in color was measured by using a solution containing no titanium oxide as a reference standard, on condition that a transmittance of the solution containing no titanium oxide was set as 0. The results are shown in Table 2.

### Example 2

The procedure of Example 1 was repeated, except that the drying with hot air at 110°C for 3 hours was followed by baking at 300°C for 3 hours, to obtain titanium oxide. Figure 4 shows an ultraviolet-visible reflection spectrum of the titanium oxide. Table 1 shows a percentage of weight loss determined by thermogravimetric analysis and a reflectance determined based on the ultraviolet-visible reflection spectrum. Figure 6 shows the result of X-ray structural analysis of the composite titanium oxide (by using XRD Cu Kα radiation, Rigaku RINT-2500VHF manufactured by Rigaku Corporation).

Figure 7 shows a Raman spectrum of the titanium oxide (measured by NRS-3100 manufactured by JASCO International Co., Ltd.).

In a 25-ml glass sample tube, 10 mg of the titanium oxide obtained in Example 2 was added to 20 ml of an aqueous solution containing 10 µmol/L methylene blue and dispersed by ultrasonication. A transmittance of the resulting solution with respect to light of 630 nm wavelength was measured, and a rate of change in color was measured by using a solution containing no titanium oxide as a reference standard, on condition that a transmittance of the solution containing no titanium oxide was set as 0. The results are shown in Table 2.

### Example 3

The procedure of Example 1 was repeated, except that the drying with hot air at 110°C for 3 hours was followed by baking at 400°C for 3 hours, to obtain titanium oxide.

Figure 4 shows an ultraviolet-visible reflection spectrum of the titanium oxide.. Table 1 shows a percentage of weight loss determined by thermogravimetric analysis and a reflectance determined based on the ultraviolet-visible reflection spectrum. Figure 6 shows the results of X ray structural analysis of the composite titanium oxide (by using XRD Cu Kα radiation, Rigaku RINT-2500VHF by Rigaku Corporation).

Figure 7 shows a Raman spectrum of the titanium oxide (measured by NRS-3100 manufactured by JASCO International Co., Ltd.).

In a 25-ml glass sample tube, 10 mg of the titanium oxide obtained in Example 3 was added to 20 ml of an aqueous solution containing 10 µmol/L methylene blue and dispersed by ultrasonication. A transmittance of the resulting solution with respect to light of 630 nm wavelength was measured, and a rate of change in color was measured by using a solution containing no titanium oxide as a reference standard, on condition that a transmittance of the solution containing no titanium oxide was set as 0. The results are shown in Table 2.

### Example 4

The procedure of Example 1 was repeated, except that the drying with hot air at 110°C for 3 hours was followed by baking at 500°C for 3 hours, to obtain titanium oxide. Figure 4 shows an ultraviolet-visible reflection spectrum of the titanium oxide. Table 1 shows a percentage of weight loss determined by thermogravimetric analysis and a reflectance determined based on the ultraviolet-visible reflection spectrum. Figure 6 shows the results of X ray structural analysis of the composite titanium oxide (by using XRD Cu Kα radiation, Rigaku RINT-2500VHF by Rigaku Corporation).

Figure 7 shows a Raman spectrum of the titanium oxide (measured by NRS-3100 manufactured by JASCO International Co., Ltd.).

In a 25-ml glass sample tube, 10 mg of the titanium oxide obtained in Example 4 was added to 20 ml of an aqueous solution containing 10 µmol/L methylene blue and dispersed using ultrasound. A transmittance of the resulting solution with respect to light of 630 nm wavelength was measured, and a rate of change in color was measured by using a solution containing no titanium oxide as a reference standard, on condition that a transmittance of the solution containing no titanium oxide was set as 0. The results are shown in Table 2.

### Example 5

The procedure of Example 1 was repeated, except that the drying with hot air at 110°C for 3 hours was followed by baking at 800°C for 3 hours, to obtain titanium oxide. Figure 4 shows an ultraviolet-visible reflection spectrum of the titanium oxide. Table 1 shows a percentage of weight loss determined by thermogravimetric analysis and a reflectance determined based on the ultraviolet-visible reflection spectrum. Figure 6 shows the results of X ray structural analysis of the composite titanium oxide (by using XRD Cu Kα radiation, Rigaku RINT-2500VHF by Rigaku Corporation).

Figure 7 shows a Raman spectrum of the titanium oxide (measured by NRS-3100 manufactured by JASCO International Co., Ltd.).

In a 25-ml glass sample tube, 10 mg of the titanium oxide obtained in Example 5 was added to 20 ml of an aqueous solution containing 10 µmol/L methylene blue and dispersed by ultrasonication. A transmittance of the resulting solution with respect to light of 630 nm wavelength was measured, and a rate of change in color was measured by using a solution containing no titanium oxide as a reference standard, on condition that a transmittance of the solution containing no titanium oxide was set as 0. The results are shown in Table 2.

### Example 6

The procedure of Example 1 was repeated, except that the electric current was 1 A. The resulting titanium oxide was 0.2 g. The resulting titanium oxide exhibited the same XRD spectrum and Raman spectrum as those in Example 1.

### Example 7

The procedure of Example 1 was repeated, except that the electric current was 2 A. The resulting titanium oxide was 2.8 g. The resulting titanium oxide exhibited the same XRD spectrum and Raman spectrum as those in Example 1.

### Example 8

The procedure of Example 1 was repeated, except that the electric current was 4 A. The resulting titanium oxide was 6.0 g. The resulting titanium oxide exhibited the same XRD spectrum and Raman spectrum as those in Example 1. There was a black matter attached to the electrodes, and an aggregate was obtained. Analysis by XRD showed that the aggregate was titanium monoxide, and that an amount of the product was 1.1 g.

### Example 9

The procedure of Example 1 was repeated, except that the voltage was 150 V. The resulting titanium oxide was 1.2 g. The titanium oxide exhibited the same XRD spectrum and Raman spectrum as those in Example 1.

### Example 10

The procedure of Example 1 was repeated, except that the voltage was 300 V. The resulting titanium oxide was 6.2 g. The resulting titanium oxide exhibited the same XRD spectrum and Raman spectrum as those in Example 1. There was a black matter attached to the electrodes, and an aggregate was obtained. Analysis by XRD showed that the aggregate was titanium monoxide, and that an amount of the product was 2.1 g.

### Example 11

The procedure of Example 1 was repeated, except that the discharge interval was 10 milliseconds. The resulting titanium oxide was 5.9 g. The resulting titanium oxide exhibited the same XRD spectrum and Raman spectrum as those in Example 1.

### Example 12

The procedure of Example 1 was repeated, except that the discharge time was 40 microseconds. The resulting titanium oxide was 6.1 g. The resulting titanium oxide exhibited the same XRD spectrum and Raman spectrum as those in Example 1.

### Reference Example

Figure 4 shows an ultraviolet-visible reflection spectrum of anatase titanium oxide (trade name: ST-01) manufactured by Ishihara Sangyo Kaisha, Ltd. Table 1 shows a percentage of weight loss determined by thermogravimetric analysis and a reflectance determined based on an ultraviolet-visible reflection spectrum.

Figure 7 shows a Raman spectrum of the titanium oxide (measured by NRS-3100 manufactured by JASCO International Co., Ltd.).

In a 25-ml glass sample tube, 10 mg of the titanium oxide obtained in Reference Example was added to 20 ml of an aqueous solution containing 10 µmol/L methylene blue and dispersed by ultrasonication. A transmittance of the resulting solution with respect to light of 630 nm wavelength was measured, and a rate of change in color was measured by using a solution containing no titanium oxide as a reference standard, on condition that a transmittance of the solution containing no titanium oxide was set as 0. The results are shown in Table 2.

### Comparative Example 1

The procedure of Example 1 was repeated, except that the electric current was 5 A. No titanium dioxide (TiO₂) was obtained, but titanium monoxide (TiO) was obtained. Comparative Example 2

The procedure of Example 1 was repeated, except that the voltage was 45 V, but no titanium oxide was obtained.

**[Table 1]**

| | Reflectance at 400 nm to 700 nm (%) | Percentage weight loss at 400°C to 800°C (%) |
|---|---|---|
| Example 1 | 26 | 0.2 |
| Example 2 | 38 | 0.2 |
| Example 3 | 55 | 0.2 |
| Example 4 | 70 | 0.1 |
| Example 5 | 75 | 0.1 |
| Reference Example | 96 | 1.3 |

**[Table 2]**

| | After 1 day | After 5 days | After 7 days |
|---|---|---|---|
| Example 1 | 2 | 22 | 34 |
| Example 2 | 2 | 18 | 30 |
| Example 3 | 2 | 12 | 24 |
| Example 4 | 1 | 10 | 19 |
| Example 5 | 1 | 8 | 15 |
| Reference Example | 0 | 2 | 5 |

The data in Table 1 shows that a reflectance of the titanium oxide obtained by the method of the present invention with respect to light having a wavelength of 400 to 700 nm was 80% or lower; that is to say, the titanium oxide obtained by the method of the present invention is capable of absorbing visible light and thus can be used as a pigment as well as a photocatalyst. In some cases, the titanium oxide is exposed to a high-temperature environment in practical use or when it is processed into a specific form for practical use, but properties of the titanium oxide must be retained. Thus, high thermal stability is required. The titanium oxide obtained by the method of the present invention had a low percentage weight loss of 0.1 to 0.2% at 400 to 800°C, indicating that the titanium oxide obtained by the method of the present invention had high thermal stability and possessed characteristics that, for example, it would not undergo change of form, including decomposition, when used as or processed into a pigment or photocatalyst.

The data in Table 2 shows that while the color of methylene blue changed significantly over time in Examples 1 to 5 in which the titanium oxide of the present invention was used, almost no change in color was observed in Reference Example using the commercially-available anatase titanium oxide. It was demonstrated that the titanium oxide obtained by the method of the present invention absorbed especially visible light to oxidize organic matters.

Figure 1 shows that the nanosized crystalline particles were obtained in Example 1 and did not have large crystallites.

Figure 2 shows that the particles obtained in Example 1 were fine particles. The TEM image of higher resolution shows that an interplanar d-spacing was 0.35 nm, and that the particles had an anatase structure.

Figure 3 shows that the particles obtained in Example 1 had a small weight loss at a heating temerature of 400 to 800°C. Figure 5 shows that the titanium oxide of Reference Example had a great weight loss during heating at a temperature within the range of 400 to 800°C, indicating that the titanium oxide of Reference Example had lower thermal stability than that of the titanium oxide of Example 1.

Figure 4 shows differences in a reflectance with respect to light of the ultraviolet to visible light ranges between the particles obtained in Examples 1 to 5 and the particles obtained in Reference Example. The particles of Reference Example 1 had a light reflectance of nearly 1 (= 100%), and almost all incident light was reflected. On the other hand, the particles of Examples 1 to 5 had a reflectance of 0.8 (= 80%) or lower with respect to light having a wavelength of 400 to 700 nm, and absorbed visible light.

Figure 6 shows that crystals were grown by the thermal treatment in Examples 1 to 5 and that titanium oxide having the rutile and/or anatase structure was obtained.

Figure 7 teaches that although crystals were grown by the thermal treatment in Examples 1 to 5, the titanium oxides of Examples 1 to 5 had a surface layer structure different from that of the conventional anatase titanium oxide (Reference Example).

Conventional titanium oxides do not have photocatalytic properties and the like under irradiation of light having a wavelength in the ultraviolet to visible light ranges. The present invention provides the titanium oxide having a novel surface structure, thereby enabling utilization of new properties that the conventional titanium oxides could not achieve, such as visible light absorbency and high thermal stability.

### INDUSTRIAL APPLICABILITY

Titanium oxide obtained by the method of the present invention shows high light absorbency, and absorbs not only light of the ultraviolet range but also visible light. Thus, the titanium oxide obtained by the method of the present invention is suitable for use as a pigment as well as a photocatalyst. The titanium oxide obtained by the method of the present invention is useful as a material for environmental clean-up, such as removal of toxic substances, deodorization and decomposition of malodorous substances, sterilization and prevention of fouling.

## Claims

1. A method of producing an anatase titanium oxide, comprising creating pulsed plasma by an electric current of lower than 5 amperes between titanium electrodes in water to oxidize titanium.

2. A method of producing a composite titanium oxide **(TiO₂)** having the anatase structure and the rutile structure, comprising heating an anatase titanium oxide obtained by a method of Claim 1.

## Patentansprüche

1. Verfahren zum Herstellen eines Anatastitanoxids, umfassend Erzeugen eines gepulsten Plasmas mittels eines elektrischen Stroms von weniger als 5 Ampere zwischen Titanelektroden in Wasser, um Titan zu oxidieren.

2. Verfahren zum Herstellen eines Verbundtitanoxids (TiO₂) mit der Anatasstruktur und der Rutilstruktur, umfassend Erhitzen eines Anatastitanoxids, das durch ein Verfahren nach Anspruch 1 erhalten ist.

## Revendications

1. Procédé de production d'un oxyde de titane anatase, comprenant la création d'un plasma pulsé par un courant électrique inférieur à 5 ampères entre des électrodes en titane dans de l'eau pour oxyder du titane.

2. Procédé de production d'un oxyde de titane composite (TiO₂) présentant la structure anatase et la structure rutile, comprenant le chauffage d'un oxyde de titane anatase obtenu par un procédé selon la revendication 1.
